(19) Europäisches Patentamt
European Patent Office
Office européen des brevets

(11) **EP 4 079 963 A1**

(12) **EUROPEAN PATENT APPLICATION**
published in accordance with Art. 153(4) EPC

(43) Date of publication:
**26.10.2022 Bulletin 2022/43**

(21) Application number: **20916677.6**

(22) Date of filing: **13.11.2020**

(51) International Patent Classification (IPC):
**D21H 11/20** (2006.01)     **A61F 13/551** (2006.01)
**C08B 15/04** (2006.01)     **D21C 5/02** (2006.01)
**D21C 9/00** (2006.01)

(52) Cooperative Patent Classification (CPC):
**A61F 13/551; C08B 15/04; D21C 5/02; D21C 9/00;
D21H 11/20;** Y02W 30/64

(86) International application number:
**PCT/JP2020/042526**

(87) International publication number:
**WO 2021/152958 (05.08.2021 Gazette 2021/31)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.01.2020 JP 2020015469**

(71) Applicant: **Unicharm Corporation
Shikokuchuo-shi, Ehime 799-0111 (JP)**

(72) Inventors:
• **KONISHI, Takayoshi**
  **Kanonji-shi, Kagawa 769-1602 (JP)**
• **BANDOH, Takeshi**
  **Kanonji-shi, Kagawa 769-1602 (JP)**
• **KATO, Takashi**
  **Kanonji-shi, Kagawa 769-1602 (JP)**
• **KURITA, Noritomo**
  **Kanonji-shi, Kagawa 769-1602 (JP)**
• **ICHIURA, Hideaki**
  **Kochi-shi, Kochi 780-8520 (JP)**

(74) Representative: **Dolleymores
9 Rickmansworth Road
Watford, Hertfordshire WD18 0JU (GB)**

(54) **METHOD FOR PRODUCING PULP FIBER FOR CARBOXYLATED CELLULOSE NANOFIBRILLATION USE, AND PULP FIBER FOR CARBOXYLATED CELLULOSE NANOFIBRILLATION USE**

(57) The purpose of the present disclosure is to provide a method for producing a pulp fiber for carboxylated cellulose nanofibrillation use whereby it is possible to form a carboxylated cellulose nanofiber having an excellent balance between handling properties and physical properties. A method for producing a pulp fiber for carboxylated cellulose nanofibrillation use characterized by comprising a fiber formation step in which an ozone-containing gas is fed to a treatment solution having a wood pulp fiber immersed therein and having a pH value of 6.5 or less in such a manner that a CT value which is a product of the concentration of ozone in the ozone-containing gas and the time for the treatment can become more than 6000 ppm·min to form the pulp fiber for carboxylated cellulose nanofibrillation use from the wood pulp fiber.

EP 4 079 963 A1

**Description**

FIELD

The present disclosure relates to a method of producing a pulp fiber for carboxylated cellulose nanofibrillation use, and a pulp fiber for carboxylated cellulose nanofibrillation use.

BACKGROUND

Studies are underway to produce a cellulose nanofiber (hereinafter, abbreviated as "CNF" in some cases)-converting pulp fiber and CNF from a pulp fiber. For example, Patent Literature 1 discloses a method of producing a cellulose nanofiber including a step (A) of preparing pulp obtained by carrying out kraft pulping after a hydrolysis treatment, a step (B) of preparing oxidized cellulose by oxidizing the pulp in water using an oxidizing agent in the presence of (1) an N-oxyl compound (for example, 2,2,6,6-tetramethylpiperidin-1-oxyradical, TEMPO) and (2) a compound selected from the group consisting of a bromide, an iodide, or a mixture thereof, and a step (C) of producing a cellulose nanofiber by defibrillating and dispersing the oxidized cellulose. According to Patent Literature 1, the production method is considered to enable the provision of a cellulose nanofiber dispersion liquid having a low viscosity and excellent fluidity even at a high concentration.

In addition, Patent Literature 2 describes a method of producing a chemically-modified pulp-dried solid substance including a step of drying a mixture of a chemically-modified pulp obtained by chemically modifying a cellulose raw material and a liquid medium at 20°C to 80°C. According to Patent Literature 2, it is considered that the above-described chemically-modified pulp-dried solid substance enables the production of CNF having excellent dispersibility.

Paragraph [0016] of Patent Literature 2 describes a method in which an N-oxyl compound (2,2,6,6-tetramethylpiperidin-1-oxyradical, TEMPO) is used as an example of a carboxylation method of a cellulose raw material. In addition, paragraph [0024] of Patent Literature 2 describes, as "other examples" of the carboxylation method of a cellulose raw material, a treatment carried out at a concentration of ozone of 50 to 250 g/m$^3$ for 1 to 360 minutes.

In addition, paragraph [0021] of Patent Literature 2 describes that, in order to efficiently progress the oxidation of cellulose in the above-described other example, the pH of a reaction liquid needs to be maintained at approximately 8 to 12 and preferably 10 to 11 by adding an alkaline solution such as an aqueous solution of sodium hydroxide.

[CITATION LIST]

[PATENT LITERATURE]

Patent Literature 1: PTC International Publication No. WO 2013/047218
Patent Literature 2: Japanese Unexamined Patent Publication No. 2018-95761

SUMMARY

[TECHNICAL PROBLEM]

In Patent Literature 1, when CNF is produced using TEMPO, the degree of polymerization and viscosity of the CNF to be formed become high, and the handling properties of the CNF are poor, and thus an additional step is required to decrease the viscosity of the CNF. Therefore, the method described in Patent Literature 1 enables the production of CNF having excellent handling properties, meanwhile, the steps are troublesome, and there is room for improvement. In addition, in Patent Literature 1, in a case where TEMPO is used to carboxylate a cellulose raw material, there is a possibility that TEMPO may remain in CNF to be produced, which poses a risk from the safety and psychological viewpoint.

As a result of additional tests on the "other examples" of Patent Literature 2, the inventors of the present application found that, due to the introduction of a carboxyl group into the cellulose raw material, the degree of polymerization (molecular weight) of the cellulose raw material significantly decreases, and, while carboxylated CNF to be formed has excellent handling properties, there is a possibility that there may be a risk in physical properties. Therefore, an aspect of the present disclosure is to provide a method of producing a pulp fiber for carboxylated cellulose nanofibrillation use capable of forming a carboxylated cellulose nanofiber having an excellent balance between handling properties and physical properties.

[SOLUTION TO PROBLEM]

The inventors of the present disclosure found a method of producing a pulp fiber for carboxylated cellulose nanofibrillation use, the method comprising a fiber formation step of forming a pulp fiber for carboxylated cellulose nanofibrillation use from a wood pulp fiber by feeding an ozone-containing gas to a treatment liquid having the wood pulp fiber immersed therein and having a pH of 6.5 or less in a manner such that a CT value that is a product of a concentration of ozone in the ozone-containing gas and a treatment time becomes more than 6,000 ppm·minute.

[ADVANTAGEOUS EFFECT OF THE INVENTION]

The method of the present disclosure enables the production of a pulp fiber for carboxylated cellulose nanofibrillation use capable of forming a carboxylated cellulose nanofiber having an excellent balance between handling properties and physical properties.

BRIEF DESCRIPTION OF DRAWINGS

FIG. 1 is an explanatory diagram for illustrating an example.
FIG. 2 is an explanatory diagram for illustrating an example.
FIG. 3 is an explanatory diagram for illustrating an example.

DESCRIPTION OF EMBODIMENTS

Specifically, the present disclosure relates to the following aspects.

[Aspect 1]

A method of producing a pulp fiber for carboxylated cellulose nanofibrillation use, the method comprising:
a fiber formation step of forming a pulp fiber for carboxylated cellulose nanofibrillation use from a wood pulp fiber by feeding an ozone-containing gas to a treatment liquid having the wood pulp fiber immersed therein and having a pH of 6.5 or less in a manner such that a CT value that is a product of a concentration of ozone in the ozone-containing gas and a treatment time becomes more than 6,000 ppm·minute.

In the above-described method, since a carboxylated CNF-converting pulp fiber is formed from the wood pulp fiber in the treatment liquid having a predetermined pH under a predetermined ozone condition in the fiber formation step, a $-CH_2OH$ group at the position 6 of cellulose configuring the wood pulp fiber can be oxidized to a carboxyl group while a decrease in the degree of polymerization of the cellulose is suppressed. Therefore, in the above-described method, a carboxylated CNF-converting pulp fiber capable of forming carboxylated CNF having an excellent balance between handling properties and physical properties can be produced.

[Aspect 2]

The method according to Aspect 1, wherein the treatment liquid contains an acid. In the above-described method, since the treatment liquid contains an acid, it is easy to hold the pH of the treatment liquid within a predetermined range, and the above-described method enables the production of a carboxylated CNF-converting pulp fiber capable of forming carboxylated CNF having an excellent balance between handling properties and physical properties.

[Aspect 3]

The method according to Aspect 2, wherein the acid is citric acid. In the above-described method, since the acid is citric acid, it is easy to hold the pH of the treatment liquid within a predetermined range, and the above-described method enables the production of a carboxylated CNF-converting pulp fiber capable of forming carboxylated CNF having an excellent balance between handling properties and physical properties.

[Aspect 4]

The method according to Aspect 3, wherein the treatment liquid contains the citric acid at a concentration of 3.0 to 10.0 mass%.

In the above-described method, since the treatment liquid contains citric acid at a predetermined concentration, it is easy to hold the pH of the treatment liquid within a predetermined range, and the above-described method enables the production of a carboxylated CNF-converting pulp fiber capable of forming carboxylated CNF having an excellent balance between handling properties and physical properties.

[Aspect 5]

The method according to any one of Aspects 1 to 4, wherein, after 60 minutes from initiation of the fiber formation step, a degree of polymerization-carboxyl group amount index ($I_{60}$) represented by a product of a degree of polymerization ($DP_{60}$) and an amount of a carboxyl group ($C_{60}$) (mmol/g) of the pulp fiber for carboxylated cellulose nanofibrillation use satisfies a requirement of $58 \leq I_{60}$.

In the above-described method, after 60 minutes from the initiation of the fiber formation step, the degree of polymerization-carboxyl group amount index ($I_{60}$) has a predetermined value, that is, a predetermined degree of polymerization and a predetermined amount of a carboxyl group. Therefore, the above-described method enables the production of a carboxylated CNF-converting pulp fiber capable of forming carboxylated CNF having an excellent balance between handling properties and physical properties.

[Aspect 6]

The method according to any one of Aspects 1 to 5, wherein, after 120 minutes from initiation of the fiber formation step, a degree of polymerization-carboxyl group amount index ($I_{120}$) represented by a product of a degree of polymerization ($DP_{120}$) and an amount of a carboxyl group ($C_{120}$) (mmol/g) of the pulp fiber for carboxylated cellulose nanofibrillation use satisfies a requirement of $46 \leq I_{120}$.

In the above-described method, after 120 minutes from the initiation of the fiber formation step, the degree of polymerization-carboxyl group amount index ($I_{120}$) has a predetermined value, that is, a predetermined degree of polymerization and a predetermined amount of a carboxyl group. Therefore, the above-described method enables the production of a carboxylated CNF-converting pulp fiber capable of forming carboxylated CNF having an excellent balance between handling properties and physical properties.

[Aspect 7]

The method according to any one of Aspects 1 to 6, wherein the pulp fiber for carboxylated cellulose nanofibrillation use has a hemicellulose content of less than 8.0 mass%.

It is known that a wood pulp fiber, for example, a softwood pulp fiber contains approximately 10 to approximately 25 mass% of hemicellulose in addition to approximately 50 to approximately 60 mass% of cellulose. Hemicellulose is abundant in the cell wall of plants. In a case where a softwood pulp fiber is used as, for example, a carboxylated CNF-converting pulp fiber, there is a case where hemicellulose present in the softwood pulp fiber remains in the carboxylated CNF-converting pulp fiber and the remaining hemicellulose impairs the function of carboxylated CNF.

In the above-described method, since the carboxylated CNF-converting pulp fiber has a predetermined hemicellulose content, it becomes easy to produce carboxylated CNF from the carboxylated CNF-converting pulp fiber.

[Aspect 8]

The method according to any one of Aspects 1 to 7, wherein the pulp fiber for carboxylated cellulose nanofibrillation use has a lignin content of 0.10 mass% or less.

It is known that a wood pulp fiber, for example, a softwood pulp fiber contains approximately 20 to approximately 30 mass% of lignin. In a case where a softwood pulp fiber is used as, for example, a carboxylated CNF-converting pulp fiber, there is a case where lignin present in the softwood pulp fiber remains in the carboxylated CNF-converting pulp fiber and the remaining lignin impairs the function of carboxylated CNF.

In the above-described method, since the carboxylated CNF-converting pulp fiber has a predetermined lignin content, it becomes easy to produce carboxylated CNF from the carboxylated CNF-converting pulp fiber.

[Aspect 9]

The method according to any one of Aspects 1 to 8, wherein the wood pulp fiber is derived from a used sanitary article.

In the above-described method, since the wood pulp fiber is derived from a used sanitary article, in a case where the treatment liquid contains a superabsorbent polymer while the ozone-containing gas cleans, sterilizes, bleaches, and the like pulp fibers contained in the used sanitary article in the fiber formation step, a carboxylated CNF-converting pulp fiber can be produced while the superabsorbent polymer is decomposed.

[Aspect 10]

The method according to Aspect 9, wherein the used sanitary article further contains a superabsorbent polymer, and the wood pulp fiber contains the superabsorbent polymer.
In the above-described method, since the wood pulp fiber contains the superabsorbent polymer, in the fiber formation step, a carboxylated CNF-converting pulp fiber can be produced while the ozone-containing gas decomposes the superabsorbent polymer.

[Aspect 11]

The method according to Aspect 10, further comprising, before the fiber formation step, an inactivation step of inactivating the superabsorbent polymer.
In used sanitary articles, there are many cases where, in an absorbent body containing wood pulp fibers and superabsorbent polymers, the plurality of superabsorbent polymers and the plurality of wood pulp fibers form a coupling structure due to the facts that (i) the superabsorbent polymers swell as the superabsorbent polymers absorb a liquid such as a bodily fluid and engulf the wood pulp fibers, (ii) the swollen superabsorbent polymers cause gel blocking or the like while engulfing the wood pulp fibers, and the like.
In the above-described method, since the predetermined inactivation step is included before the fiber formation step, even in a case where a liquid such as excrement held by the superabsorbent polymer is discharged in advance and the superabsorbent polymer and the wood pulp fiber form a coupling structure before the fiber formation step, ozone in the ozone-containing gas is capable of removing the superabsorbent polymer configuring the coupling structure, and the ozone in the ozone-containing gas is capable of acting on the pulp fiber configuring the coupling structure and producing a carboxylated CNF-converting pulp fiber.

[Aspect 12]

The method according to Aspect 11, wherein, in the inactivation step, the superabsorbent polymer is inactivated by adding an acid.
In the above-described method, since the superabsorbent polymer is inactivated by adding an acid in the inactivation step, it becomes easy to adjust the pH of the treatment liquid to a predetermined range in the next fiber formation step.

[Aspect 13]

The method according to any one of Aspects 10 to 12, wherein, in the fiber formation step, the superabsorbent polymer is decomposed using the ozone-containing gas and solubilized in the treatment liquid.
In the above-described method, since the superabsorbent polymer is decomposed using the ozone-containing gas and solubilized in the treatment liquid in the fiber formation step, a carboxylated CNF-converting pulp fiber containing a small amount of an impurity can be produced.

[Aspect 14]

A pulp fiber for carboxylated cellulose nanofibrillation use formed from a wood pulp fiber, wherein a degree of polymerization-carboxyl group amount index (I) represented by a product of a degree of polymerization (DP) and an amount of a carboxyl group (C) (mmol/g) of the pulp fiber for carboxylated cellulose nanofibrillation use satisfies a requirement of $46 \leq I$.
The carboxylated CNF-converting pulp fiber has a predetermined value of the degree of polymerization-carboxyl group amount index (I). Therefore, the pulp fiber for carboxylated cellulose nanofibrillation use is capable of forming carboxylated CNF having an excellent balance between handling properties and physical properties.

[Aspect 15]

The pulp fiber for carboxylated cellulose nanofibrillation use according to Aspect 14, wherein the amount of the carboxyl group (C) (mmol/g) is within a range of 0.11 to 0.60 mmol/g. Since the carboxylated CNF-converting pulp fiber has a predetermined amount of the carboxyl group, carboxylated CNF having an excellent balance between handling properties and physical properties can be formed.

[Aspect 16]

The pulp fiber for carboxylated cellulose nanofibrillation use according to Aspect 14 or 15, wherein a nitroxyl radical species, an oxide thereof, and a reduced product thereof are not contained. The carboxylated CNF-converting pulp fiber does not contain a nitroxyl radical species, for example, TEMPO (2,2,6,6-tetramethylpiperidine 1-oxyl), an oxide thereof, and a reduced product thereof and is thus preferable from the safety viewpoint.

Hereinafter, the method of producing a pulp fiber for carboxylated cellulose nanofibrillation use and the pulp fiber for carboxylated cellulose nanofibrillation use of the present disclosure will be described in detail. The method of producing a pulp fiber for carboxylated cellulose nanofibrillation use of the present disclosure includes the following step. A fiber formation step of forming a pulp fiber for carboxylated cellulose nanofibrillation use from a wood pulp fiber by feeding an ozone-containing gas to a treatment liquid having the wood pulp fiber immersed therein and having a pH of 6.5 or less in a manner such that a CT value that is the product of the concentration of ozone in the ozone-containing gas and the treatment time becomes more than 6,000 ppm·minute (hereinafter, simply referred to as "the fiber formation step" in some cases)

It should be noted that, hereinafter, there will be cases where "the pulp fiber for carboxylated cellulose nanofibrillation use" is referred to as "the carboxylated CNF-converting pulp fiber", and there will be cases where "the method of producing a pulp fiber for carboxylated cellulose nanofibrillation use" is referred to as "the method of producing a carboxylated CNF-converting pulp fiber", "the production method of the present disclosure", or the like.

In a case where the wood pulp fiber contains a superabsorbent polymer, the method of producing a carboxylated CNF-converting pulp fiber of the present disclosure can further include the following step before the fiber formation step. An inactivation step of inactivating the superabsorbent polymer (hereinafter, simply referred to as "the inactivation step")

[Fiber formation step]

In the fiber formation step, an ozone-containing gas is fed to a treatment liquid having a wood pulp fiber immersed therein and having a pH of 6.5 or less. The wood pulp fiber is not particularly limited, and examples thereof include softwood pulp fibers and hardwood pulp fibers. It should be noted that the wood pulp fiber may be a virgin pulp fiber, a recycled pulp fiber, or a pulp fiber derived from a used sanitary article.

The treatment liquid has a pH of 6.5 or less, preferably has a pH of 5.0 or less, more preferably has a pH of 4.0 or less, and even more preferably has a pH of 2.5 or less. This makes it easy to produce a carboxylated CNF-converting pulp fiber capable of forming carboxylated CNF having an excellent balance between handling properties and physical properties. It should be noted that the above-described pH means a pH at 20°C.

It is preferable that the treatment liquid achieves the above-described pH by containing an acid. Examples of the above-described acid include organic acids and inorganic acids. Examples of the organic acids include citric acid, tartaric acid, glycolic acid, malic acid, succinic acid, acetic acid, ascorbic acid, and the like. Examples of the inorganic acids include a sulfuric acid, a hydrochloric acid, and a nitric acid, and the sulfuric acid is preferable from the viewpoint of not containing chlorine, the cost, or the like.

As described below, in the carboxylated CNF-converting pulp fiber and the carboxylated CNF, a state where a carboxyl group is not neutralized is preferably adopted, and, in order for that, the acid is preferably an acid has a smaller acid dissociation constant (pKa, in water) than the acid dissociation constant (pKa, in water) of the carboxyl group (the carboxyl group at the position 6 of cellulose).

It should be noted that, in a case where the acid has a plurality of acid groups, for example, in a case where the acid is a dibasic acid or a tribasic acid, it is preferable that the largest acid dissociation constant (pKa, in water) among the acid dissociation constants (pKa, in water) of the acid is smaller than the acid dissociation constant (p$K_a$, in water) of the carboxyl group (the carboxyl group at the position 6 of cellulose). This is from the viewpoint of the efficiency of the acid.

In the present specification, as the acid dissociation constant (p$K_a$, in water), values described in Handbook on Electrochemistry edited by the Electrochemical Society of Japan can be adopted. According to Handbook on Electrochemistry, the acid dissociation constants (p$K_a$, in water, 25°C) of main compounds are as described below.

[Organic acids]

- Tartaric acid: 2.99 (p$K_{a1}$), 4.44 (p$K_{a2}$)
- malic acid: 3.24 (p$K_{a1}$), 4.71 (p$K_{a2}$)

- citric acid: 2.87 ($pK_{a1}$), 4.35 ($pK_{a2}$), 5.69 ($pK_{a3}$)

The acid dissociation constants ($pK_a$, in water) of acids that are not described in Handbook on Electrochemistry can be obtained by measurement. Examples of an instrument capable of measuring the acid dissociation constants ($pK_a$, in water) include a compound property evaluation and analysis system, T3 manufactured by Sirius Analytical Instruments Ltd.

In a case where the treatment liquid contains citric acid as the acid, the treatment liquid contains citric acid at a concentration of preferably 3.0 to 10.0 mass%, more preferably 3.5 to 8.0 mass%, and even more preferably 4.0 to 6.0 mass%. This makes it easy to produce a carboxylated CNF-converting pulp fiber capable of forming carboxylated CNF having an excellent balance between handling properties and physical properties.

The sizes of bubbles in the ozone-containing gas are not particularly limited, and, for example, bubbles are fed to the treatment liquid as small bubbles (for example, microbubbles or nanobubbles). The feeding of the ozone-containing gas to the treatment liquid having a predetermined pH makes it possible for ozone to oxidize the $-CH_2OH$ group at the position 6 of cellulose to a carboxyl group and to decrease the degree of polymerization of the carboxylated CNF to a predetermined range.

The ozone-containing gas is fed to the treatment liquid in a manner such that the CT value, which is the product of the concentration of ozone in the ozone-containing gas and the treatment time, becomes more than 6,000 ppm-min, preferably 8,000 ppm-min or more, more preferably 9,000 ppm-min or more, even more preferably 10,000 ppm-min or more, and far even more preferably 12,000 ppm·min or more. In addition, the ozone-containing gas is fed to the treatment liquid in a manner such that the CT value, which is the product of the concentration of ozone in the ozone-containing gas and the treatment time, becomes preferably 40,000 ppm·min or less, more preferably 30,000 ppm·min or less, and even more preferably 24,000 ppm·min or less. This makes it easy to produce a carboxylated CNF-converting pulp fiber having a degree of polymerization and an amount of a carboxyl group with predetermined ranges and capable of forming carboxylated CNF having an excellent balance between handling properties and physical properties.

The concentration of ozone in the ozone-containing gas is preferably 40 to 200 ppm ($g/m^3$), more preferably 80 to 200 ppm ($g/m^3$), and even more preferably 100 to 200 ppm ($g/m^3$). This makes it easy to produce a carboxylated CNF-converting pulp fiber capable of forming carboxylated CNF having an excellent balance between handling properties and physical properties. It should be noted that the concentration of ozone in the ozone-containing gas can be measured with, for example, an ultraviolet absorption type ozone concentration meter (for example, manufactured by EcoDesign, Inc.: ozone monitor OZM-5000G).

It should be noted that the concentration of ozone in the treatment liquid is preferably 1 to 50 ppm ($g/m^3$), more preferably 2 to 40 ppm ($g/m^3$), and even more preferably 3 to 30 ppm ($g/m^3$).

The concentration of ozone in the treatment liquid is measured by the following method.

(1) 85 mL of a treatment liquid in which ozone is dissolved is put into a 100 mL graduated cylinder containing approximately 0.15 g of potassium iodide and 5 mL of a 10% citric acid solution and reacted.

(2) The treatment liquid after the reaction is moved to a 200 mL Erlenmeyer flask, a starch solution is added into the Erlenmeyer flask to color the treatment liquid in purple, then, the treatment liquid is titrated with 0.01 mol/L sodium thiosulfate under stirring until the treatment liquid turns colorless, and the addition amount a (mL) is recorded.

(3) The concentration of ozone in the aqueous solution is calculated using the following equation. The concentration (mass ppm) of ozone in the treatment liquid is calculated by the following equation:

$$\text{concentration (mass ppm) of ozone in treatment liquid}$$
$$= a \, (\text{mL}) \times 0.24 \times 0.85 \, (\text{mL}).$$

In the fiber formation step, the temperature of the treatment liquid is not particularly limited and may be, for example, room temperature (25°C) or may be higher than room temperature (25°C). In addition, in the fiber formation step, the treatment time is preferably 30 minutes to 210 minutes, more preferably 45 minutes to 180 minutes, and even more preferably 60 minutes to 120 minutes. This makes it easy to efficiently produce a carboxylated CNF-converting pulp fiber having a degree of polymerization and an amount of a carboxyl group within predetermined ranges.

In a case where the degree of polymerization of the carboxylated CNF-converting pulp fiber after n minutes from the initiation of the fiber formation step is indicated by $DP_n$, the amount of a carboxyl group is indicated by Cn (mmol/g), and the degree of polymerization-carboxyl group amount index represented by the product of the degree of polymerization ($DP_n$) and the amount of a carboxyl group ($C_n$) of the carboxylated CNF-converting pulp fiber is indicated by In, the degree of polymerization-carboxyl group amount index (In) is preferably within the following range.

In the fiber formation step, after 60 minutes from the initiation of the fiber formation step (n=60), the degree of polymerization-carboxyl group amount index ($I_{60}$) is preferably 58 or more, more preferably 60 or more, even more preferably 61 or more, and far even more preferably 62 or more. In addition, in the fiber formation step, after 60 minutes from the initiation of the fiber formation step, the degree of polymerization-carboxyl group amount index ($I_{60}$) is preferably 200 or less, more preferably 150 or less, even more preferably 100 or less, and far even more preferably 80 or less. This makes it easy to produce a carboxylated CNF-converting pulp fiber capable of forming carboxylated CNF having an excellent balance between handling properties and physical properties.

In the fiber formation step, after 120 minutes from the initiation of the fiber formation step, the degree of polymerization-carboxyl group amount index ($I_{120}$) is preferably 46 or more, more preferably 49 or more, even more preferably 52 or more, and far even more preferably 54 or more. In addition, in the fiber formation step, after 120 minutes from the initiation of the fiber formation step, the degree of polymerization-carboxyl group amount index ($I_{120}$) is preferably 200 or less, more preferably 150 or less, even more preferably 100 or less, and far even more preferably 80 or less. This makes it easy to produce a carboxylated CNF-converting pulp fiber capable of forming carboxylated CNF having an excellent balance between handling properties and physical properties.

In the present specification, the amount of a carboxyl group ($C_n$) (mmol/g) of the carboxylated CNF-converting pulp fiber after n minutes from the initiation of the fiber formation step is measured as described below.

(1) After n minutes from the initiation of the fiber formation step, the carboxylated CNF-converting pulp fiber is collected.
(2) Approximately 0.4 g of the carboxylated CNF-converting pulp fiber is added to a container to which 170 mL of distilled water has been added, and the carboxylated CNF-converting pulp fiber is dispersed.
(3) 10 mL of 0.01M NaCl is added to the container.
(4) 0.1M HCl is added to the container, and the pH is adjusted to 2.8.
(5) 0.05M NaOH is added to the container at a rate of 0.1 mL/min to 0.2 mL/min until the pH becomes 11, and the electrical conductivity of the contents in the container is monitored.
(6) The addition amount of 0.05M NaOH is plotted along the X-axis, the electrical conductivity is plotted along the Y-axis, and an addition amount of 0.05M NaOH at a point where the electrical conductivity becomes constant (V) (mL) is obtained.
(7) The carboxylated CNF-converting pulp fiber is recovered by filtration, and the absolute dry mass (m(g)) thereof is measured.
(8) The amount of a carboxyl group content ($C_n$) (mmol/g) of the carboxylated CNF-converting pulp fiber is calculated by the following equation:

$$C_n \text{ (mmol/L)} = (V \times 0.05/1000)\,/m.$$

It should be noted that the pH is measured using a pHashion pH meter, C-62 manufactured by As One Corporation. In addition, the electrical conductivity is measured using a portable electrical conductivity meter (CM-31P type) manufactured by DKK-TOA Corporation.

In addition, in the present specification, the degree of polymerization ($DP_n$) of the carboxylated CNF-converting pulp fiber after n minutes from the initiation of the fiber formation step is measured as described below.

(1) After n minutes from the initiation of the fiber formation step, the carboxylated CNF-converting pulp fiber is collected.
(2) The viscosity ratio $\eta_r$ ($= \eta/\eta_0$) is measured according to "6.4.1 Viscosity ratio" of "Cellulose in dilute solutions - Determination of limiting viscosity number - Method in cupri-ethylene-diamine (CED) solution" specified in JIS 8215:1998.
(3) The degree of polymerization ($DP_n$) is calculated using the following equation.

Specific viscosity:

$$\eta_{sp} = \eta_r - 1$$

Intrinsic viscosity:

$$[\eta] = \eta_{sp}/(100 \times c(1 + 0.28\eta_{sp}))$$

Degree of polymerization:

$$DP_n = 175 \times [\eta]$$

It should be noted that the above-described equation is based on the description on page 101 of Wood Science Experiment Manual (edited by the Japan Wood Research Society, Buneido Publishing Co., Ltd., 2000), and c means the cellulose concentration (g/mL).

In the present disclosure, the carboxylated CNF-converting pulp fiber formed by the fiber formation step has a hemicellulose content of preferably less than 8.0 mass%, preferably 7.0 mass% or less, more preferably 6.5 mass% or less, and even more preferably 6.0 mass% or less. This makes it easy to produce carboxylated CNF from the carboxylated CNF-converting pulp fiber. It should be noted that the lower limit of the hemicellulose content of the carboxylated CNF-converting pulp fiber is 0.0 mass%.

In the present disclosure, the carboxylated CNF-converting pulp fiber formed by the fiber formation step has a lignin content of preferably 0.10 mass% or less, more preferably 0.08 mass% or less, and even more preferably 0.06 mass% or less. This makes it easy to produce carboxylated CNF from the carboxylated CNF-converting pulp fiber. It should be noted that the lower limit of the lignin content of the carboxylated CNF-converting pulp fiber is 0.00 mass%.

In the present disclosure, the carboxylated CNF-converting pulp fiber has a cellulose content of preferably 87.0 mass% or more, more preferably 90 mass% or more, and even more preferably 93 mass% or more. This makes it easy to produce carboxylated CNF from the carboxylated CNF-converting pulp fiber. It should be noted that the upper limit of the cellulose content of the carboxylated CNF-converting pulp fiber is 100.0 mass%.

In the present disclosure, the cellulose content, the hemicellulose content, and the lignin content in the carboxylated CNF-converting pulp fiber can be measured according to a well-known detergent analysis method.

As described above, in the production method of the present disclosure, the wood pulp fiber in the fiber formation step can be derived from a used sanitary article (for example, a paper diaper, a urine collecting pad, a sanitary napkin, a bed sheet, or a pet sheet). This makes it possible to collectively sterilize, bleach, deodorize, and the like the wood pulp fiber to which a bodily fluid or the like is attached with the ozone-containing gas in the fiber formation step.

In addition, the used sanitary article can contain a superabsorbent polymer for holding a liquid such as a bodily fluid. For example, in a case where the used sanitary article includes a wood pulp fiber and a superabsorbent polymer in the absorbent body, the wood pulp fiber recovered from the used sanitary article contains the superabsorbent polymer that has absorbed a liquid in many cases.

The above-described superabsorbent polymer is not particularly limited and includes those well-known in the art, and examples thereof include starch-based, cellulose-based, and synthetic polymer-based superabsorbent polymers. Examples of the starch-based or cellulose-based superabsorbent polymer include starch-acrylic acid (salt) graft copolymers, saponified products of starch-acrylonitrile copolymers, and crosslinked products of sodium carboxymethylcellulose. Examples of the synthetic polymer-based superabsorbent polymers include polyacrylate-based, polysulfonate-based, anhydrous maleate-based, polyacrylamide-based, polyvinyl alcohol-based, polyethylene oxide-based, polyaspartate-based, polyglutamate-based, polyalginate-based, starch-based, and cellulose-based superabsorbent polymers (SAP), and polyacrylate-based (particularly, sodium polyacrylate-based) superabsorbent polymers are preferable.

There are many cases where a plurality of superabsorbent polymers and a plurality of wood pulp fibers form a coupling structure due to the facts that the superabsorbent polymers swell as the superabsorbent polymers absorb a liquid such as a bodily fluid and engulf the wood pulp fibers, the swollen superabsorbent polymers cause gel blocking or the like while engulfing the wood pulp fibers, and the like. Due to that, it is common that a superabsorbent polymer is contained as the above-described coupling structure in a wood pulp fiber derived from a used sanitary article.

In the fiber formation step, even in a case where the wood pulp fiber contains the superabsorbent polymer as, for example, a coupling structure, the ozone-containing gas is capable of oxidizing and decomposing the superabsorbent polymer, solubilizing the superabsorbent polymer in the treatment liquid, and remove the superabsorbent polymer.

In a case where the wood pulp fiber contains the superabsorbent polymer, the production method of the present disclosure preferably further includes an inactivation step of inactivating the superabsorbent polymer before the fiber formation step. In the production method of the present disclosure, in a case where the wood pulp fiber is derived from a used sanitary article, when it is necessary to decompose the superabsorbent polymer with the ozone-containing gas, the fiber formation step can be carried out with reference to Japanese Unexamined Patent Publication No. 2019-007119.

[Inactivation step]

As the inactivation step, a step that is used in the related art can be adopted as it is, and the superabsorbent polymer can be inactivated by, for example, adding an inactivating agent. Examples of the inactivating agent include acids (for example, inorganic acids and organic acids), lime, calcium chloride, magnesium sulfate, magnesium chloride, aluminum sulfate, aluminum chloride, and the like. It should be noted that examples of the inorganic acids and the organic acids include those described above.

The acid is preferable because it does not leave ash content in the pulp fibers. In a case where an acid is used as the inactivating agent, the pH for inactivation is preferably 2.5 or less and more preferably 1.3 to 2.4. This is from the viewpoint of the inactivation of water-absorbent polymers, the protection of facilities, the sterilization of the carboxylated CNF-converting pulp fiber, and the like.

The temperature of the treatment liquid in the inactivation step is not particularly limited as long as the inactivation of the superabsorbent polymer proceeds. The temperature may be room temperature or higher than room temperature, and is, for example, 15°C to 30°C. In addition, the inactivation step time is not particularly limited as long as the superabsorbent polymer is inactivated and dehydrated, and the inactivation step time is, for example, 2 to 60 minutes and preferably 5 to 30 minutes.

In the inactivation step, the inactivating agent is preferably an acid, for example, citric acid. This is because, in the fiber formation step, the adjustment of the pH becomes unnecessary or the adjustment of the pH becomes easy.

In the carboxylated CNF-converting pulp fiber obtained by the production method of the present disclosure and the carboxylated CNF-converting pulp fiber of the present disclosure, it is preferable that, in a case where the degree of polymerization of the carboxylated CNF-converting pulp fiber is indicated by DP, the amount of a carboxyl group is indicated by C (mmol/g), and the degree of polymerization- carboxyl group amount index represented by the product of the degree of polymerization (DP) and the amount of a carboxyl group (C) of the carboxylated CNF-converting pulp fiber is indicated by I, the degree of polymerization- carboxyl group amount index (I) is within the following range.

The degree of polymerization-carboxyl group amount index (I) is preferably 42 or more, more preferably 46 or more, even more preferably 52 or more, far even more preferably 54 or more, far even more preferably 56 or more, far even more preferably 58 or more, far even more preferably 60 or more, far even more preferably 61 or more, and far even more preferably 62 or more. In addition, the degree of polymerization-carboxyl group amount index (I) is preferably 200 or less, more preferably 150 or less, even more preferably 100 or less, far even more preferably 80 or less, and far even more preferably 70 or less. This makes it easy for the carboxylated CNF-converting pulp fiber to form carboxylated CNF having an excellent balance between handling properties and physical properties.

In the carboxylated CNF-converting pulp fiber of the present disclosure, the amount of a carboxyl group (C) (mmol/g) is within a range of preferably 0.11 to 0.60 mmol/g, more preferably 0.15 to 0.50 mmol/g, and even more preferably 0.17 to 0.45 mmol/g. This makes it easy to form carboxylated CNF having an excellent balance between handling properties and physical properties.

In the carboxylated CNF-converting pulp fiber of the present disclosure, the carboxyl group may not be neutralized, that is, may be in a -COOH state, or may be neutralized to form a salt, for example, a sodium salt (-COONa), a potassium salt (-COOK), a lithium salt (-COOLi), or the like.

The carboxyl group is preferably not neutralized, that is, in a -COOH state. This makes it possible to easily produce, for example, a fiber composite reinforcing material containing carboxylated CNF and a resin. In a case where the carboxyl group is neutralized, there is a case where mixing with the resin becomes difficult.

The carboxylated CNF-converting pulp fiber of the present disclosure is useful as a carboxylated CNF precursor. For example, the carboxylated CNF-converting pulp fiber of the present disclosure can be stored as a carboxylated CNF precursor, be pulverized as necessary by a well-known pulverizing method such as a ball mill, and be used to easily produce carboxylated CNF. For example, in a method of producing carboxylated CNF using a TEMPO catalyst, a precursor is not present and needs to be stored as carboxylated CNF, but it is well known that it is redispersion of dried CNF in water or the like is difficult. Examples

Hereinafter, the present disclosure will be described with reference to examples, but the present disclosure is not limited to these examples.

<Example 1>

Approximately 600 g of a softwood pulp fiber (virgin pulp fiber) was immersed in a container filled with 60 kg of deionized water as a treatment liquid, and a fiber formation step was carried out at a concentration of citric acid in the treatment liquid, a concentration of ozone in an ozone-containing gas, and a treatment time, which will be described below, thereby forming a carboxylated CNF-converting pulp fiber. It should be noted that the ozone-containing gas was fed to the treatment liquid as nanobubbles.

It should be noted that the degree of polymerization, the amount of a carboxyl group, and the degree of polymerization-carboxyl group amount index at a treatment time of 0 minutes are the degree of polymerization, the amount of the carboxyl group, and the degree of polymerization- carboxyl group amount index of the softwood pulp fiber before the fiber formation step was carried out. Concentration of citric acid: 0 mass%, 3 mass%, 5 mass%

- Concentration of ozone in ozone-containing gas: 200 ppm
- Treatment time: 0 min, 60 min, 120 min, 210 min

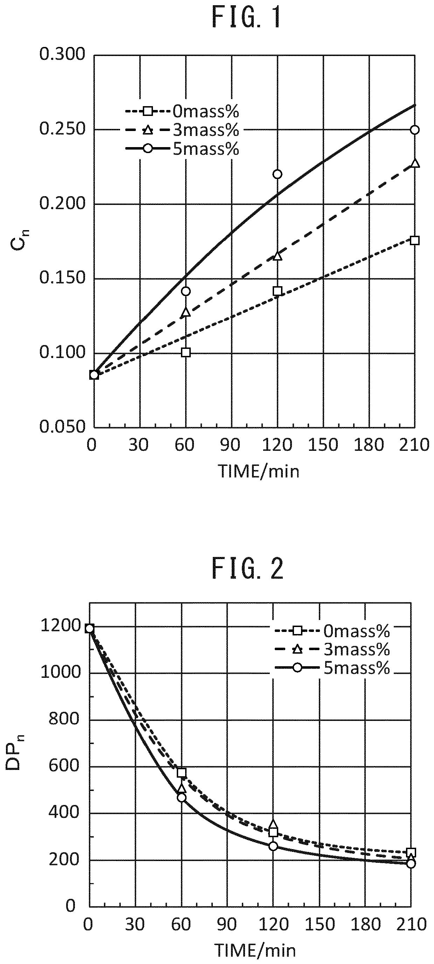

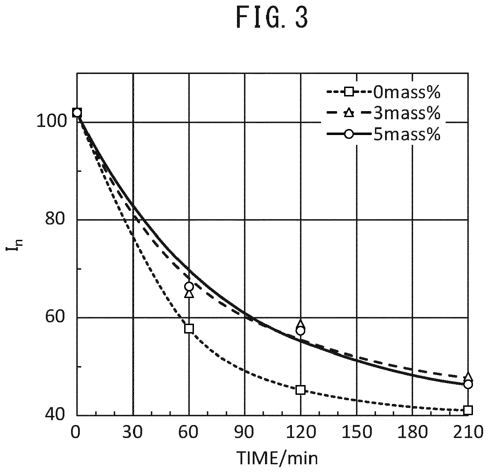

The relationship between the treatment time and the amount of the carboxyl group in the carboxylated CNF-converting pulp fiber is shown in Table 1 and FIG. 1, the relationship between the treatment time and the degree of polymerization is shown in Table 2 and FIG. 2, and the relationship between the treatment time and the degree of polymerization- carboxyl group amount index ($I_n$) is shown in Table 3 and FIG. 3. It should be noted that, at concentrations of citric acid of 0 mass%, 3 mass%, and 5 mass%, the pHs of the treatment liquid were 6.9, 1.8, and 1.6, respectively.

[Table 1]

Table 1

| Concentration of citric acid | Amount of carboxyl group: $C_n$ (mmol/g) | | | |
|---|---|---|---|---|
| | 0 minutes | 60 minutes | 120 minutes | 210 minutes |
| 0 mass% | 0.086 | 0.101 | 0.142 | 0.176 |
| 3 mass% | 0.086 | 0.128 | 0.165 | 0.227 |
| 5 mass% | 0.086 | 0.142 | 0.220 | 0.250 |

[Table 2]

Table 2

| Concentration of citric acid | Degree of polymerization: $DP_n$ | | | |
|---|---|---|---|---|
| | 0 minutes | 60 minutes | 120 minutes | 210 minutes |
| 0 mass% | 1191 | 574 | 319 | 234 |
| 3 mass% | 1191 | 508 | 355 | 211 |
| 5 mass% | 1191 | 468 | 260 | 185 |

[Table 3]

Table 3

| Concentration of citric acid | Degree of polymerization- carboxyl group amount index: $I_n$ | | | |
|---|---|---|---|---|
| | 0 minutes | 60 minutes | 120 minutes | 210 minutes |
| 0 mass% | 101.9 | 57.7 | 45.3 | 41.1 |
| 3 mass% | 101.9 | 64.8 | 58.5 | 47.8 |
| 5 mass% | 101.9 | 66.4 | 57.3 | 46.4 |

From Tables 1 to 3 and FIGS. 1 to 3, it is found that, in a case where the concentrations of citric acid are 3 mass% and 5 mass%, the degree of polymerization-carboxyl group amount index ($I_n$) of the carboxylated CNF-converting pulp fiber is high compared with a case where the concentration of citric acid is 0 mass%. Therefore, it is found that, in a case where citric acid is added, in the softwood pulp fiber, the -$CH_2OH$ group at the position 6 of cellulose can be efficiently oxidized to a carboxyl group while suppressing a decrease in the degree of polymerization to a predetermined range.

As a result of adding water to a total of 4 kinds of carboxylated CNF-converting pulp fibers at concentrations of citric acid of 3 mass% and 5 mass% and treatment times of 60 minutes and 120 minutes, respectively, and pulverizing the carboxylated CNF-converting pulp fibers using a ball mill, which is a well-known pulverizing method, it was confirmed that carboxylated CNF was easily formed due to the viscosity of the solution after pulverization, the properties of the pulverized products after drying, and the like.

Example 2

Approximately 600 g of a softwood pulp fiber (virgin pulp fiber) was immersed in a container filled with 60 kg of deionized water as a treatment liquid, and a fiber formation step was carried out at a concentration of citric acid in the treatment liquid, a concentration of ozone in an ozone-containing gas, and a treatment time, which will be described below, thereby forming a carboxylated CNF-converting pulp fiber. It should be noted that the ozone-containing gas was fed to the treatment liquid as nanobubbles.

It should be noted that the degree of polymerization, the amount of a carboxyl group, and the degree of polymerization·carboxyl group amount index at a treatment time of 0 minutes are the degree of polymerization, the amount of the carboxyl group, and the degree of polymerization- carboxyl group amount index of the softwood pulp fiber before the fiber formation step was carried out. Concentration of citric acid: 1 mass%

- Concentration of ozone in ozone-containing gas: 200 ppm
- Treatment time: 0 min, 30 min, 210 min, 420 min

The crystallinity of the carboxylated CNF-converting pulp fiber was measured using a wide-angle X-ray diffractometer RINT2500HL manufactured by Rigaku Corporation. Measurement conditions, an X-ray diffraction profile, and an X-ray diffraction standard data collection are as described below. <Measurement conditions>

- X-ray source: Cu

- X-ray output: 50 kV-250 mA

- Optical system: Concentrated beam with monochrometer

- Slit: DS 0.5 deg + 10 mmH

   SS 0.5 deg

   RS 0.15

- Scanning axis: $2\theta/\theta$

- Scanning method: Continuous scanning

- Scanning range: $5 \leq 2\theta \leq 70$ deg

- Scanning rate: 0.5 deg/min

- Sampling: 0.02 deg

<X-ray diffraction profile>

- Vertical axis: Diffraction intensity (cps)

- Horizontal axis: Diffraction angle (deg)

- Diffraction conditions: $2d\sin\theta = n\lambda$

   d: Space of lattice plane (nm)

   $\theta$: Diffraction angle (deg)

   n: Reflection order

   $\lambda$: X-ray wavelength (0.15406 nm)

<X-ray diffraction standard data collection>

• ICDD: International Centre for Diffraction Data

The results are shown in Table 4.

[Table 4]

Table 4

| Treatment time | Integral intensity (a.u.) | | Crystallinity (%) |
|---|---|---|---|
| | Crystalline | Amorphous | |
| 0 minutes | 690170 | 801231 | 46.3 |
| 30 minutes | 698886 | 806794 | 46.4 |
| 210 minutes | 1009999 | 942171 | 51.7 |
| 420 minutes | 1041066 | 1018044 | 50.6 |

Measurement of the carboxylated CNF-converting pulp fiber with an FT-IR3100FT-IR/600UMA manufactured by Varian confirmed that the amount of carboxyl groups in the carboxylated CNF-converting pulp fiber increased with the increase of the treatment time.

**Claims**

1. A method of producing a pulp fiber for carboxylated cellulose nanofibrillation use, the method comprising:
   a fiber formation step of forming a pulp fiber for carboxylated cellulose nanofibrillation use from a wood pulp fiber by feeding an ozone-containing gas to a treatment liquid having the wood pulp fiber immersed therein and having a pH of 6.5 or less in a manner such that a CT value that is a product of a concentration of ozone in the ozone-containing gas and a treatment time becomes more than 6,000 ppm·minute.

2. The method according to claim 1,
   wherein the treatment liquid contains an acid.

3. The method according to claim 2,
   wherein the acid is citric acid.

4. The method according to claim 3,
   wherein the treatment liquid contains the citric acid at a concentration of 3.0 to 10.0 mass%.

5. The method according to any one of claims 1 to 4,
   wherein, after 60 minutes from initiation of the fiber formation step, a degree of polymerization-carboxyl group amount index ($I_{60}$) represented by a product of a degree of polymerization ($DP_{60}$) and an amount of a carboxyl group ($C_{60}$) (mmol/g) of the pulp fiber for carboxylated cellulose nanofibrillation use satisfies a requirement of

$$58 \leq I_{60}.$$

6. The method according to any one of claims 1 to 5,
   wherein, after 120 minutes from initiation of the fiber formation step, a degree of polymerization·carboxyl group amount index ($I_{120}$) represented by a product of a degree of polymerization ($DP_{120}$) and an amount of a carboxyl group ($C_{120}$) (mmol/g) of the pulp fiber for carboxylated cellulose nanofibrillation use satisfies a requirement of

$$46 \le I_{120}.$$

**7.** The method according to any one of claims 1 to 6,
wherein the pulp fiber for carboxylated cellulose nanofibrillation use has a hemicellulose content of less than 8.0 mass%.

**8.** The method according to any one of claims 1 to 7,
wherein the pulp fiber for carboxylated cellulose nanofibrillation use has a lignin content of 0.10 mass% or less.

**9.** The method according to any one of claims 1 to 8,
wherein the wood pulp fiber is derived from a used sanitary article.

**10.** The method according to claim 9,
wherein the used sanitary article further contains a superabsorbent polymer, and the wood pulp fiber contains the superabsorbent polymer.

**11.** The method according to claim 10, further comprising, before the fiber formation step:
an inactivation step of inactivating the superabsorbent polymer.

**12.** The method according to claim 11,
wherein, in the inactivation step, the superabsorbent polymer is inactivated by adding an acid.

**13.** The method according to any one of claims 10 to 12,
wherein, in the fiber formation step, the superabsorbent polymer is decomposed using the ozone-containing gas and solubilized in the treatment liquid.

**14.** A pulp fiber for carboxylated cellulose nanofibrillation use formed from a wood pulp fiber,
wherein a degree of polymerization·carboxyl group amount index (I) represented by a product of a degree of polymerization (DP) and an amount of a carboxyl group (C) (mmol/g) of the pulp fiber for carboxylated cellulose nanofibrillation use satisfies a requirement of

$$46 \le I.$$

**15.** The pulp fiber for carboxylated cellulose nanofibrillation use according to claim 14,
wherein the amount of the carboxyl group (C) (mmol/g) is within a range of 0.11 to 0.60 mmol/g.

**16.** The pulp fiber for carboxylated cellulose nanofibrillation use according to claim 14 or 15,
wherein a nitroxyl radical species, an oxide thereof, and a reduced product thereof are not contained.

# FIG. 1

# FIG. 2

# FIG. 3

**INTERNATIONAL SEARCH REPORT**

| International application No. |
| --- |
| PCT/JP2020/042526 |

**A. CLASSIFICATION OF SUBJECT MATTER**
Int. Cl. D21H11/20(2006.01)i, A61F13/551(2006.01)i, G08B15/04(2006.01)i, D21C5/02(2006.01)i, D21C9/00(2006.01)i
FI: D21H11/20, A61F13/551, C08B15/04, D21C9/00, D21C5/02
According to International Patent Classification (IPC) or to both national classification and IPC

**B. FIELDS SEARCHED**

Minimum documentation searched (classification system followed by classification symbols)
Int. Cl. A61F13/15-13/84, A61L15/16-15/64, C08B1/00-37/18, D21B1/00-1/38, D21C1/00-11/14, D21D1/00-99/00, D21F1/00-13/12, D21G1/00-9/00, D21H11/00-27/42, D21J1/00-7/00

Documentation searched other than minimum documentation to the extent that such documents are included in the fields searched
Published examined utility model applications of Japan      1922-1996
Published unexamined utility model applications of Japan    1971-2021
Registered utility model specifications of Japan            1996-2021
Published registered utility model applications of Japan    1994-2021

Electronic data base consulted during the international search (name of data base and, where practicable, search terms used)
JSTPlus/JMEDPlus/JST7580 (JDreamIII)

**C. DOCUMENTS CONSIDERED TO BE RELEVANT**

| Category* | Citation of document, with indication, where appropriate, of the relevant passages | Relevant to claim No. |
| --- | --- | --- |
| X | CN 108178802 A (GUANGXI UNIVERSITY) 19 June 2018, claims 1-3, example 1 | 1, 2, 7 |
| Y | | 8-13 |
| Y | WO 2019/003655 A1 (UNI-CHARM CORP.) 03 January 2019, claims, paragraphs [0062]-[0068], [0082]-[0095] | 8-13 |
| X | WO 2013/176102 A1 (OJI HOLDINGS CORP.) 28 November 2013, example 2 | 14-16 |
| A | WO 2012/115115 A1 (MITSUBISHI CHEMICAL CORP.) 30 August 2012 | 1-16 |

☒  Further documents are listed in the continuation of Box C.      ☒  See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 04.01.2021 | 19.01.2021 |

| Name and mailing address of the ISA/ | Authorized officer |
| --- | --- |
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**INTERNATIONAL SEARCH REPORT**

International application No.

PCT/JP2020/042526

C (Continuation).   DOCUMENTS CONSIDERED TO BE RELEVANT

| Category* | Citation of document, with indication, where appropriate, of the relevant passages | Relevant to claim No. |
|---|---|---|
| P, X | CN 111206449 A (TIANJIN UNIVERSITY OF SCIENCE AND TECHNOLOGY) 29 May 2020, claims 1-9, examples, fig. 3 | 1, 2, 14-16 |
| P, X | JP 2020-109224 A (UNI-CHARM CORP.) 16 July 2020, claims, examples | 1-16 |

Form PCT/ISA/210 (continuation of second sheet) (January 2015)

**EP 4 079 963 A1**

| INTERNATIONAL SEARCH REPORT | International application No. |
|---|---|
| | PCT/JP2020/042526 |

**Box No. II**     **Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III**     **Observations where unity of invention is lacking (Continuation of item 3 of first sheet)**

This International Searching Authority found multiple inventions in this international application, as follows:

  (See extra sheet.)

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**     ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (January 2015)

INTERNATIONAL SEARCH REPORT
Information on patent family members

| | | International application No. |
| --- | --- | --- |
| | | PCT/JP2020/042526 |

| Patent Documents referred to in the Report | Publication Date | Patent Family | Publication Date |
| --- | --- | --- | --- |
| CN 108178802 A | 19.06.2018 | (Family: none) | |
| WO 2019/003655 A1 | 03.01.2019 | US 2020/0131702 A1<br>claims, paragraphs<br>[0090]-[0096],<br>[0109]-[0126]<br>EP 3626882 A1<br>CN 110770394 A | |
| WO 2013/176102 A1 | 28.11.2013 | (Family: none) | |
| WO 2012/115115 A1 | 30.08.2012 | US 2013/0338250 A1<br>EP 2679604 A1<br>CN 103429622 A | |
| CN 111206449 A | 29.05.2020 | (Family: none) | |
| JP 2020-109224 A | 16.07.2020 | (Family: none) | |

Form PCT/ISA/210 (patent family annex) (January 2015)

International application No.

PCT/JP2020/042526

(Continuation of Box No. III)

(Invention 1) Claims 1-13

Claims 1-13 are classified as invention 1 as a result of having the special technical feature of "a method for manufacturing pulp fibers for making carboxylated cellulose nanofibers, the method including: a fiber forming step in which an ozone-containing gas is supplied to a processing liquid having a pH of 6.5 or lower and having wood pulp fibers immersed therein, such that the CT value, which is the product of the ozone concentration in the ozone-containing gas and the processing time, exceeds 6,000 ppm/minute, to form pulp fibers for making carboxylated cellulose nanofibers from the wood pulp fibers."

(Invention 2) Claims 14-16

Claims 14-16 share, with claim 1 classified as invention 1, the feature of being pulp fibers for making carboxylated cellulose nanofibers. However, this feature does not make a contribution over the prior art in light of the content disclosed in documents 1 and 3, and thus this feature cannot be said to be a special technical feature. Furthermore, there is no other identical or corresponding special technical feature between these inventions.

Therefore, claims 14-16 cannot be classified as invention 1.

Claims 14-16 are classified as invention 2 as a result of having the special technical feature of "the degree of polymerization/carboxyl group amount index I, which is represented by the product of the degree of polymerization DP of the pulp fibers for making carboxylated cellulose nanofibers and the carboxyl group amount C (mmol/g), satisfies $46 \leq I$."

Form PCT/ISA/210 (extra sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013047218 A
- JP 2018095761 A
- JP 2019007119 A